(19) Europäisches Patentamt
European Patent Office
Office européen des brevets

(11) **EP 3 699 396 B1**

(12) **EUROPEAN PATENT SPECIFICATION**

(45) Date of publication and mention
of the grant of the patent:
**09.08.2023  Bulletin 2023/32**

(21) Application number: **20167107.0**

(22) Date of filing: **25.09.2012**

(51) International Patent Classification (IPC):
*E21B 49/00* $^{(2006.01)}$          *E21B 47/14* $^{(2006.01)}$

(52) Cooperative Patent Classification (CPC):
**E21B 47/14; E21B 49/003; G01V 1/50**

(54) **METHODS FOR EVALUATING ROCK PROPERTIES WHILE DRILLING USING DRILLING RIG-MOUNTED ACOUSTIC SENSORS**

VERFAHREN ZUR BEWERTUNG VON GESTEINSEIGENSCHAFTEN WÄHREND DES BOHRENS MIT BOHRGESTELLMONTIERTEN AKUSTISCHEN SENSOREN

PROCÉDÉS POUR ÉVALUER LES PROPRIÉTÉS D'UNE ROCHE PENDANT LE FORAGE AU MOYEN DE CAPTEURS ACOUSTIQUES MONTÉS SUR UN APPAREIL DE FORAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.09.2011   US 201161539201 P**
**26.09.2011   US 201161539213 P**
**20.07.2012   US 201213554298**
**20.07.2012   US 201213554470**

(43) Date of publication of application:
**26.08.2020   Bulletin 2020/35**

(62) Document number(s) of the earlier application(s) in accordance with Art. 76 EPC:
**12783697.1 / 2 761 134**

(73) Proprietor: **Saudi Arabian Oil Company**
**Dhahran 31311 (SA)**

(72) Inventors:
• **The inventors have waived their right to be thus mentioned.**

(74) Representative: **Marks & Clerk LLP**
**15 Fetter Lane**
**London EC4A 1BW (GB)**

(56) References cited:
**US-A1- 2006 076 161     US-B1- 6 320 820**
**US-B2- 6 891 481**

**Description**

## BACKGROUND OF THE INVENTION

### 1/2. Field of the Invention

This invention relates in general to hydrocarbon production, and more particularly, to identifying rock types and rock properties in order to improve or enhance drilling operations.

### 3. Description of the Related Art

Measuring rock properties during drilling in real time can provide the operator the ability to steer a drill bit in the direction of desired hydrocarbon concentrations. In current industrial practice and prior inventions, either resistivity or sonic logging while drilling (LWD) tools are employed to guide the drill bit during horizontal or lateral drilling. The center of these techniques is to calculate the locations of the boundary between the pay zone and the overlying rock (upper boundary), and the boundary between the pay zone and underlying rock at the sensors location. The drill bit is steered or maintained within the pay zone by keeping the drill string, at the sensors position, in the middle, or certain position between the upper and lower boundaries of the pay zone. The conventional borehole acoustic telemetry system, which transmits data at low rate (at about tens bit per second), is employed to transmit the measured data to surface.

Since the sensors are located 9.144 - 15.240 meters (30 - 50 feet) behind the drill bit, theses conventional LWD steering tools only provide data used in steering the drill bit 9.144 - 15.240 meters (30-50) feet behind the drill bit. As the result, it is only after the 9.144 - 15.240 meters (30--50 feet) that the operator finds out if the selected drilling path is or is not the desired one. Therefore, these tools are not true real-time tools.

Some newer types of systems attempt to provide data for steering the drill bit, at real-time, while still utilizing conventional borehole telemetry systems (having a relatively slow bit rate). Such systems, for example, are described as including a downhole processor configured to provide downhole on-site processing of acoustic data to interpret the lithologic properties of the rock encountered by the drill bit through comparison of the acoustic energy generated by the drill bit during drilling with predetermined bit characteristics generated by rotating the drill bit in contact with a known rock type. The lithologic properties interpreted via the comparison are then transmitted to the surface via the conventional borehole telemetry system. Although providing data in a reduced form requiring only a bit rate speed, as such systems do not provide raw data real-time which can be used for further analysis, it is nearly impossible to construct additional interpretation models or modify any interpretation models generated by the downhole processor. Further, they require additional and potentially expensive hardware that must be positioned between the drill bit and the drill string.

Some newer types of borehole data transmitting systems utilize a dedicated electronics unit and a segmented broadband cable protected by a reinforced steel cable positioned within the drill pipe to provide a much faster communication capability. Such systems have been employed into conventional LWD tools to enhance the resolution of the logged information. However the modified tools still measures rock properties at the similar location which is 9.144 - 15.240 meters (30 - 50 feet) behind the drill bit.

Looking outside the field, some seismic signal technology includes utilization of a vibration sensor positioned on a mud swivel to pick up the seismic signal generated by drill bit drilling the rocks. It is understood, however, that such a position does not provide for sufficient reception of the pilot signal. Another form of seismic signal technology provides a dedicated coupling connector encircling the drill pipe at a location near the mud swivel to carry vibration sensors. The strength of seismic signal may be weakened due to its travelling through the connector to the vibration sensors. Besides requiring the addition of the coupling connector which comprises an annular stator/retaining ring enclosing an insulating rotor, such technology requires the signal to be transferred externally through a combination rotor-stator-brush wiper engagement methodology. Studies have demonstrated that signal accuracy is reduced by this transmission method. Both these two technologies are designed for rotary table type drill rigs which have almost been phased out by a new type of top drive drill rigs.

Accordingly, recognized by the inventor is the need for apparatus, computer readable medium, program code, and methods of identifying rock properties during operational drilling that can be used in real-time steering of the drilling bit during the operational drilling, and more particularly, apparatus specifically designed to fit top drive type drill rigs and having acoustic sensors strategically positioned on the drill rig to maximally pick up the drilling sound which is generated by drill bit biting the rocks (hereafter termed as drilling acoustic signals), a signal transmitting system to transmit signals at high accuracy, and a computer/processor positioned to receive acoustic signals from the acoustic sensors and configured to process the acoustic signals and evaluate lithology type and other petrophysical properties of the rock that is currently in contact with an operationally employed drilling bit, in real-time utilizing acoustic information contained within the acoustic signals and/or evaluated characteristics of the acoustic signals. Also recognized is the need for methods of employing the apparatus.

US2006/0076161 describes an apparatus and method for identifying rock properties while drilling.

## SUMMARY **OF THE INVENTION**

In view of the foregoing, various embodiments of the present invention advantageously provide a method as recited in claim 1. Apparatus, computer readable medium, program code, and methods are provided of identifying rock properties of rock during drilling that can be used in real-time steering of the drilling bit during drilling, and more particularly, methods of providing and deploying apparatus having acoustic sensors configured to be strategically positioned on a drill rig to maximally pick up the drilling sounds, a signal transmitting system to transmit signals at high accuracy, and a computer/processor configured to evaluate lithology type and other petrophysical properties of the rock that is currently in contact with an operationally employed drilling bit, in real-time, utilizing information contained within acoustic signals received from the acoustic sensors. Various aspects also provide for the construction/assembly and configuration of the required apparatus.

According to various aspects, utilizing raw acoustic sensor data, the computer can advantageously function to derive a frequency distribution of the acoustic sensor data, derive acoustic characteristics, and determine petrophysical properties of rocks. The acoustic characteristics can advantageously further be used to identify the lithology type of the rock encountered by the drill bit, to determine the formation boundary, and to determine an optimal location of the casing shoe, among other applications. According to various aspects, to determine petrophysical properties of the rock directly from the raw acoustic sensor data signal (generally after being converted into the frequency domain and filtered), a petrophysical properties evaluation algorithm can be derived from acoustic sensor data and correspondent petrophysical properties of formation rock samples. Further, according to various aspects, having the lithology type and/or petrophysical properties of presently encountered rock, the driller can steer the drill to follow the desire path more accurately than conventionally achievable.

Various aspects can provide methods of identifying rock properties of rock, in real-time, during operational drilling, which include providing and deploying both conventional components and additional/enhanced acoustic components. Some primary conventional components of the apparatus include a drill string containing a plurality of drill pipes, a drill bit connected to the downhole end of the drill string, and a drive system including a driveshaft for rotating the drill string having both rotating and stationary portions. The additional/acoustic components can include an acoustic signal recording and transmitting system comprising one or more acoustic sensors strategically positioned at surface to detect drill sounds emanating from the drill bit and the rock encountered during drilling operations, an inductive telemetry, wireless telemetry, or wired transmitting system, and a computer to analyze the acoustic signals received from the acoustic sensors through the respective transmitting system.

Various aspects of the methods can also include both computer employable steps (operations) as described later with respect to the operations performed by various featured apparatus/program code, and various non-computer implemented steps which provide substitutable replacements for the featured computer implemented steps, in conjunction with additional non-computer implemented steps as described below and/or as featured in the appended claims. Examples of various aspects of the method are described below.

According to an aspect of a method of identifying properties of rock in a formation in real-time during drilling, the method can include the steps of providing an acoustic signal recording and transmitting system including an acoustic sensor and a transmitting system, connecting the acoustic sensor to a drive shaft of a drill rig or an extension of the driveshaft, and operably coupling a computer to one or more components of the acoustic signal recording and transmitting system to establish communications therebetween. The steps can also include sending sampling commands to a data acquisition unit, receiving an acoustic sensor data signal from the acoustic signal recording and transmitting system, and analyzing the acoustic sensor data signal to determine, real-time, lithology type and/or one or more petrophysical properties of rock engaged by the drill bit during drilling operations. The acoustic sensor data signal represents an acoustic signal generated real-time by the acoustic sensor as a result of rotational contact of the drill bit with rock during drilling.

According to an aspect of the drilling rig/drive shaft, the drive shaft has a plurality of extensions including a packing box which rotates with the drive shaft, an upper bearing cup positioned adjacent the packing box and being stationary with respect to the drive shaft, and a rotary manifold which is stationary relative to the drive shaft during drilling.

According to an aspect of the method, the step of connecting the acoustic sensor includes connecting the acoustic sensor to the packing box or connecting the acoustic sensor to an outer surface of the drive shaft, for example, at a location between a rotary manifold (operably coupled to and encircling a portion of the drive shaft) and a joint connecting the drive shaft to the drill string, to maximally pick up drill sounds of the drill bit engaging rock during drilling operations. When more than one acoustic sensor is provided, a first acoustic sensor can be connected to the packing box and a second acoustic sensor can be connected to the drive shaft.

According to an aspect of the method, the step of connecting the acoustic sensor includes connecting the acoustic sensor to an upper surface of the upper bearing cup or a lower surface of the rotary manifold to at least substantially maximally pick up drill sounds of the drill bit engaging rock during drilling operations. When more than one acoustic sensor is provided, a first acoustic sensor can be connected to the upper bearing cup and a second acoustic sensor can be connected to the rotary manifold.

According to an aspect of the acoustic signal recording and transmitting system, the transmitting portion of the system comprises an inductive telemetry system, which can transmit signals at high accuracy. An example of a suitable inductive telemetry system includes a rotating induction loop encircling a portion of the packing box, a stationary pickup configured to receive an acoustic signal from the acoustic sensor through an electromagnetic coupling with the rotating induction loop and to supply electric power to the acoustic sensor via the electromagnetic coupling between the induction loop and the pickup, a receiver positioned to receive the acoustic signal from the pickup and to transmit the acoustic signal to a data acquisition unit, and a data acquisition unit which samples the acoustic signal and digitizes the sampled signal and then sends the digitized signal (data) to the computer.

According to another aspect of an inductive telemetry system, the inductive telemetry system includes a rotating induction loop encircling a portion of the drive shaft or a cylindrically shaped rotating component adjacent to the acoustic sensor, a stationary pickup configured to receive an acoustic signal from the acoustic sensor through an electromagnetic coupling with the rotating induction loop and to supply electric power to the acoustic sensor via the electromagnetic coupling between the induction loop and the pickup, a receiver positioned to receive the acoustic signal from the pickup and to transmit the acoustic signal to a data acquisition unit, and a data acquisition unit which samples the acoustic signal and digitizes the sampled signal and then sends the digitized signal (data) to the computer.

According to another aspect of the acoustic signal recording and transmitting system, the transmitting portion of the system comprises a wireless telemetry system, which can transmit signals at high accuracy. An example of a suitable wireless telemetry system includes a wireless transmitter operably connected to or integral with the acoustic sensor to thereby define a wireless acoustic sensor, a wireless gateway configured to receive an acoustic signal from the wireless acoustic sensor and to transmit the acoustic signal or a digitized form of the acoustic signal to the computer, and optionally a data acquisition unit between the gateway and the computer. A data acquisition unit is generally only employed if the gateway or the receiver of the wireless acoustic sensor does not include components which can perform the function of digitizing the acoustic signals. In this case, the data acquisition unit digitizes the acoustic signal received from the gateway and transmits the digitized form to the computer.

According to another aspect of the acoustic signal recording and transmitting system, the transmitting system portion of the system comprises a wired transmitting system, which is the most accurate data transmitting method. An example of a suitable wired transmitting system includes a data acquisition unit configured to sample and digitize acoustic signals received from the acoustic sensor and to send the digitized acoustic signals to the computer, and a wire extending between the acoustic sensor and the data acquisition unit, secured, for example, inside a service loop of a drill rig supporting the drive shaft.

According to an aspect of the method, the step of analyzing can include the steps of deriving a frequency distribution from acoustic data contained within the acoustic sensor data signal, and correlating the frequency distribution of the processed acoustic sensor data signal to identify, real-time, the lithology type of rock engaged by the drill bit during drilling operations. The step of deriving a frequency distribution includes transforming the acoustic data into the frequency domain, e.g., employing a Fast Fourier Transform (FFT), and optionally filtering the transformed data.

The step of analyzing can also or alternatively include deriving a plurality of acoustic characteristics from acoustic data contained within the acoustic sensor data signal (e.g., mean frequency, normalized deviation of frequency, mean amplitude, normalized deviation of amplitude, and/or apparent power), and correlating the mean frequency, normalized deviation of frequency, mean amplitude, normalized deviation of amplitude, and/or apparent power, or a combination thereof, with acoustic characteristics of a rock sample of known lithology type to identify, real-time, the lithology type and/or one or more petrophysical properties of the rock engaged by the drill bit during drilling operations.

The step of analyzing can also or alternatively include deriving a petrophysical properties evaluation algorithm to predict one or more petrophysical properties of rock engaged by the drill bit during drilling operations, encoding the derived petrophysical properties evaluation algorithm in a computer program, and employing the computer program encoding the derived petrophysical properties evaluation algorithm to predict the one or more petrophysical properties of rock engaged by the drill bit during drilling operations from the acoustic data contained within the acoustic sensor data signal.

According to various aspects, apparatus for identifying rock properties, in real-time during drilling, are also provided. According to various configurations, the apparatus can include a drill bit engaging rock during drilling, a drill string and drive shaft providing media for translating vibrations/acoustics caused by the engagement of the drill bit with rock, an acoustic signal recording and transmitting system including one or more acoustic sensors strategically positioned at surface to detect drill sounds emanating from the drill bit and the rock encountered during drilling operations, an inductive telemetry, wireless telemetry, or wired transmitting system including media for transmitting an amplified acoustic sensor signal, and a computer/processor positioned and/or configured to receive the acoustic sensor signal and to analyze the acoustic signals received from the acoustic sensors through the respective transmitting system and to identify/derive the rock type and/or properties of the rocks in real-time.

An amplified acoustic sensor is an acoustic sensor having an amplifier connected to or integral with the sensor. The acoustic sensors can include, for example, accelerometers, acoustically insulated measurement microphones or contact microphones connected to select components of a drilling rig to maximally pick up the drill sounds resulting from the drill bit engaging rock during drilling operations. The select locations can include strategic positions on a packing box, a rotary manifold, an upper bearing cup, or the drive shaft (depending upon the type of sensor or data interface connection used), which allows the sensors to maximally or at least substantially maximally pick up the vibrations/acoustics, depending upon the type of transmitting system employed. In this exemplary configuration, all acoustic sensors are amplified acoustic sensors. "Amplified acoustic sensor" is hereinafter referred to as "acoustic sensor" for the simplicity.

According to an aspect of the acoustic signal recording and transmitting system, the transmitting system portion comprises an inductive telemetry system having one or more amplified acoustic sensors attached to the drive shaft and/or a packing box which rotates with the drive shaft. According to a first implementation, the inductive telemetry system includes a rotating induction loop wrapped around the packing box, a stationary pickup configured to receive an acoustic signal from an acoustic sensor through an electromagnetic coupling (induction) with the rotating induction loop and to supply electric power to the acoustic sensor via the electromagnetic coupling between the induction loop and the pickup. The inductive telemetry system also includes a receiver and a data acquisition unit. The receiver is positioned to receive the acoustic signal from the pickup and to transmit the acoustic signal/acoustic sensor data signal to the data acquisition unit which samples and digitizes the signal and then send the digitized signal (data) to a computer configured to process the acoustic signals provided by the acoustic sensors. According to another implementation, one or more acoustic sensors are also or alternatively connected directly to the drive shaft or some other rotating extension of the drive shaft located between the rotary manifold and the joint between the drive shaft and the drill string, and the induction loop is wrapped around the drive shaft or an adjacent cylindrically shaped rotating component accessible to a pickup.

According to another aspect of the transmitting system, the transmitting system comprises a wireless telemetry system including a wireless transmitter connected to or integral with the acoustic sensor to define a wireless acoustic sensor. According to a first implementation, the wireless acoustic sensor is connected to the packing box or directly to the drive shaft between the rotary manifold and the joint between the drive shaft and the drill string. According to another implementation, when there is more than one wireless acoustic sensor, wireless acoustic sensors can be connected to both the packing box and the drive shaft. The wireless telemetry system also includes a wireless receiver positioned to receive an acoustic signal/acoustic sensor data signal from the wireless acoustic sensor and is configured to transmit an acoustic sensor data signal to the computer, and optionally a data acquisition unit between the gateway and the computer. A data acquisition unit is generally only employed if the receiver or the transmitter of the wireless acoustic sensor does not include components which can perform the function of digitizing the acoustic signals. In this case, the data acquisition unit digitizes the acoustic signal received from the gateway and transmits the digitized form to the computer.

According to another aspect of the transmitting system, the transmitting system comprises a wired transmitting system including a first electrical or fiber-optic conductor connected between the acoustic sensor and a data acquisition unit, and a second electrical or fiber-optic conductor connected between the data acquisition unit and the computer. According to an implementation the wired configuration, the acoustic sensor is connected to the upper bearing cup located adjacent the packing box or the rotary manifold located above the remotely controlled valve. The positioning of the acoustic sensor on the upper bearing cup is generally preferred as it remains stationary. Positioning of the acoustic sensor on the rotary manifold, however, is acceptable as it generally remains stationary except during pipe deployment operations.

According to an aspect of the apparatus, the aforementioned computer includes a processor, memory in communication with the processor, and a petrophysical properties analyzing program, which can adapt the computer to perform various operations. The operations can include, for example, sending sampling commands to a data acquisition unit, receiving an acoustic data signal from the respective transmitting system, processing the acoustic sensor data signal--deriving a frequency distribution of the acoustic data contained within the acoustic sensor data signal, employing an acoustics characteristics evaluation algorithm to thereby derive acoustic characteristics from the acoustic sensor data signal (e.g., via analysis of the processed acoustic data), and employing a petrophysical properties evaluation algorithm to thereby derive petrophysical properties of rock undergoing drilling, real-time, from the acoustics data.

According to an aspect of the apparatus, the acoustic characteristics evaluation algorithm evaluates filtered Fast Fourier Transform data for acoustic characteristics. The acoustic characteristics can include mean frequency, normalized deviation of frequency, mean amplitude, normalized deviation of amplitude, and/or apparent power. These characteristics can be predetermined for rock samples having a known as lithology type and/or petrophysical properties, and thus, can be used to identify lithology type and other properties by comparing such characteristics of the acoustic data received during drilling to that determined for the rock samples. According to another aspect of the apparatus, the computer uses the derived acoustic characteristics to determine formation boundaries and/or an optimal deployment location of a casing shoe based on real-time detection of changes in the lithology type of the rock being drilled and/or petrophysical properties thereof.

According to an exemplary configuration, the petrophysical properties evaluation algorithm evaluates filtered Fast Fourier Transform data for the petrophysical properties. This petrophysical property data can advantageously be applied by applications to include drill bit steering, real-time lithology type identification, formation boundary determination, casing shoe position fine-tuning, etc.

Various aspects advantageously supply a new approach for a much better drilling steering. Advantageously, various aspect provide apparatus and methods that supply detailed information about the rock that is currently in contact with the drilling bit, which can be used in real-time steering the drilling bit. That is, various aspects provide an employable methodology of retrieving a sufficient level of information so that the driller always know the rock he is drilling, so that the drilling bit can be steered to follow the desire path more accurately than conventionally achievable. In comparison with conventional drilling steering tools, the real-time data provided by various aspects advantageously allow the driller to drill smoother lateral or horizontal wells with better contact with the production zone, detection of formation boundaries, and detection of the fractured zones, which can advantageously result in better well production, and further analysis on raw sensor data, if necessary.

## BRIEF DESCRIPTION OF THE DRAWINGS

So that the manner in which the features and advantages of the invention, as well as others which will become apparent, may be understood in more detail, a more particular description of the invention briefly summarized above may be had by reference to the embodiments thereof which are illustrated in the appended drawings, which form a part of this specification. It is to be noted, however, that the drawings illustrate only various embodiments of the invention and are therefore not to be considered limiting of the invention's scope as it may include other effective embodiments as well.

FIG. 1 is a partial perspective view and partial schematic diagram of a general architecture of an acoustic signal analyzing apparatus for identifying rock properties in real-time during drilling according to an embodiment of the present invention;

FIG. 2 is a sectional view of major components of an example of a drill rig, which are located around the drive shaft;

FIG. 3 is a part sectional view and part schematic diagram illustrating major components of an inductive telemetry system according to an embodiment of the present invention;

FIG. 4 is a part schematic diagram and part sectional view of a portion of an inductive telemetry system according to an embodiment of the present invention;

FIG. 5 is a plane view of the portion of the inductive telemetry system and part schematic diagram according to an embodiment of the present invention;

FIG. 6 is a part sectional view and part schematic diagram illustrating major components of a wireless telemetry system according to an embodiment of the present invention;

FIG. 7 is a part sectional view and part schematic diagram illustrating major components of a wired transmitting system according to an embodiment of the present invention;

FIG. 8 is a schematic diagram illustrating major components and functions of a computer program according to an embodiment of the present invention;

FIGS. 9A-9B are graphs illustrating examples of a frequency distribution of two types of limestone produced according to an embodiment of the present invention;

FIG. 10 is a graph illustrating a three dimensional depiction of the frequency distribution in correlation with various lithology types according to an embodiment of the present invention; and

FIG. 11 is a graph illustrating a comparison of mean frequency and normalized deviation of frequency correlated with a plurality of lithology types according to an embodiment of the present invention.

## DETAILED DESCRIPTION

The present invention will now be described more fully hereinafter with reference to the accompanying drawings, which illustrate embodiments of the invention. This invention may, however, be embodied in many different forms and should not be construed as limited to the illustrated embodiments set forth herein. Rather, these embodiments are provided so that this disclosure will be thorough and complete, and will fully convey the scope of the invention to those skilled in the art. Like numbers refer to like elements throughout. Prime notation, if used, indicates similar elements in alternative embodiments.

When drilling into different lithologies or the same lithology with different properties (e.g., lithology type, porosity, water saturation, permeability, presence of fractures, etc.) the generated acoustic sounds emanating from the drill bit and contacted rock, are distinctly different. The sounds, termed as drilling acoustic signals, transmit upward along the drill string. According to various embodiments of the present invention, drilling acoustic signals transmit from the drill string to the drive shaft, to the bearings, to the connected metal parts, and are then picked up by one or more acoustic sensors attached directly to the drive shaft or an extension of the drive shaft. The drilling acoustic signals recorded by the sensors are transmitted (generally after amplification) to a computer. The lithology type and petrophysical properties of the rock under drilling are derived from the drilling acoustic signals.

According to various embodiments of the present invention, the received acoustic signals are transformed into the frequency domain using, for example, a Fast Fourier Transformation (FFT) to generate FFT data. Some acoustic characteristics can be derived directly from the FFT data. The frequency distribution and acoustic characteristics can be used immediately in some applications, such as, for example, lithology type identification and formation boundary determination. The FFT data and acoustic characteristics data can be further analyzed using a calibrated mathematical model for the lithology type and petrophysical properties, which have wider applications than the frequency distribution and acoustic characteristics.

Where other logging while drilling tools either provide a substantial delay in the time between the drilling of a rock and the provision of information, provide a reduced amount of information to the surface, or provide insufficient signal strength, various embodiments of the present invention provide a acoustic signal having sufficient signal strength and provide a complete set of raw acoustic sensor data to a surface-based computer, real-time, which can derive information about lithology type at a position located at the cutting surface of the drill bit, to correspondingly provide such information, in real time, to the operator steering the drill bit. This advantage makes aspects of various embodiments of the present invention ideal in the application of horizontal and lateral well drill steering, locating the relative position for setting the casing shoe, detecting fractured zones, and interpreting rock lithologies and petrophysical properties in real time.

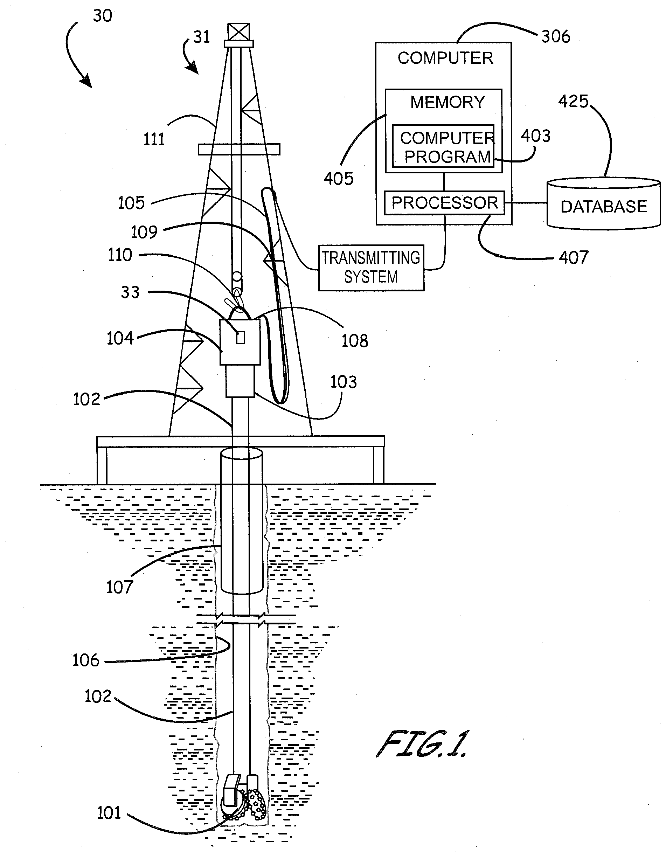

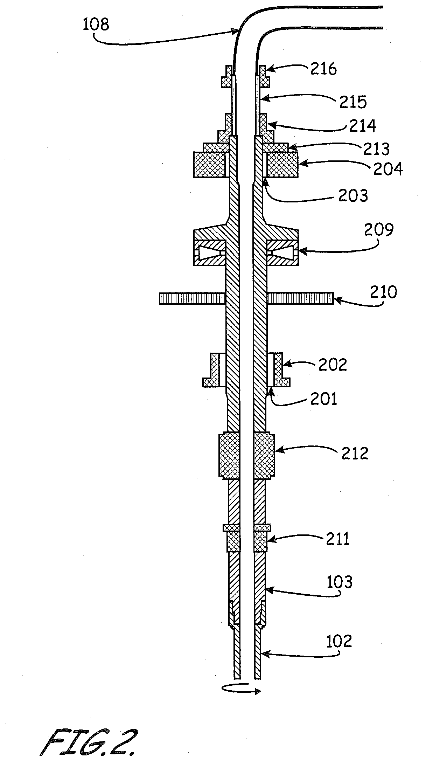

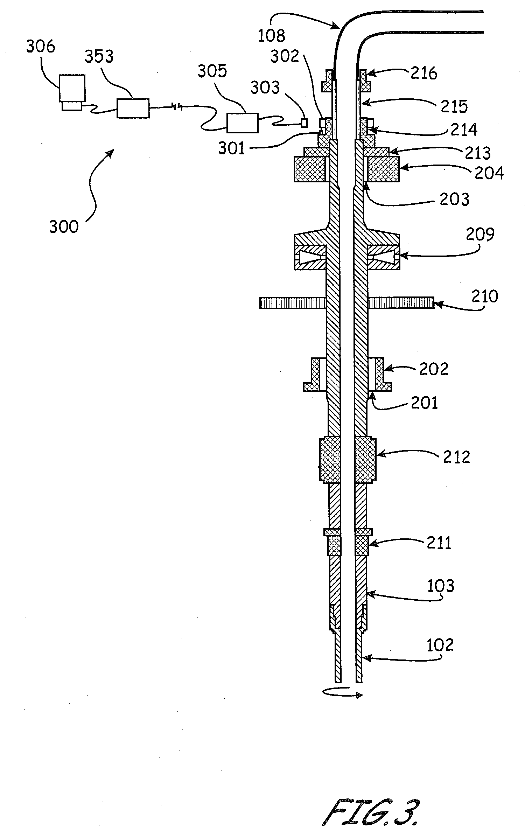

FIG. 1 schematically illustrates an exemplary acoustic signals analyzing apparatus 30 for identifying rock properties in real-time during drilling according one or more embodiments of the present invention, which employs an acoustic signal recording and transmitting system (described in detail below) on a top drive drill rig 31. Note, the illustrated top drive drill rig 31 is but one example of a drill rig that can be modified to employ one or more embodiments of the acoustic signals analyzing apparatus 30. Other drilling systems having a drive shaft can be utilized. Further, described below, are various embodiments of an acoustic signal recording system. FIG. 2 shows a generic top drive 104 according to an embodiment of the drilling rig 31 shown in FIG. 1, illustrating the major components around the drive shaft 103. FIGS. 3-7 illustrate various transmitting system type-dependent acoustic sensor modifications to the top drive 104 positioned to maximally pick up the drill sounds of the drill bit 101 engaging rock during drilling operations.

Referring to FIGS. 3-7, as the acoustic sensors 33 (in Fig. 1) of the acoustic signals recording and transmitting systems, as described herein, are positioned in strategic locations on the upper portion of the selected drill rig (e.g., top drive drill rig 31 in this example), a brief description of major parts of the drill rig 31 are described.

Referring again to FIG. 1, for a top drive drill rig 31, the top drive 104 is the central component of the rig 31. The top drive 104 is suspended in the derrick 111 by a traveling block 110. In the centre of the top drive 104, there is a drive shaft 103 which is connected to the top pipe of the drill string 102 by threads. The top drive 104 rotates the drive shaft 103, therefore the drill string 102 and the drill bit 101 to cut the rock at the bottom of the borehole 106. The power cable supplying electric power to the top drive 104 is protected inside service loops 105. Drilling mud is pumped into the borehole through a mud line 109, a goose neck 108, the drive shaft 103, and the drill string 102.

FIG. 2 shows a generic top drive 104 for an embodiment of the drilling rig 31 shown in FIG. 1, illustrating the major components around the drive shaft 103. As the drilling acoustic signals are recorded or otherwise intercepted on the drive shaft 103 or an extension of the drive shaft 103, according to various embodiments of the present invention, the major component around the drive shaft 103 are briefly introduced to help to understand the system setup.

According to the illustrated embodiment of the top drive 104 for the embodiment of a drilling rig 31 shown in FIG. 1, the drive shaft 103 and the major components around it are suspended by the traveling block 110 (see FIG. 1) through a thrust bearing 209. The drive shaft 103 is a typically metal tube between a washpipe 215 and the drill string 102. The drive shaft is kept vertical by a lower bearing 201, a rotary manifold 202, an upper bearing 203, and a bearing cup 204. The rotary manifold 202 is stationary relative to the drive shaft 103 during drilling. It does, however, rotate when making up pipes, breaking out pipes, or drill string tripping in and out of the borehole, the operations during which the drilling is suspended, and thus, continuous identification of lithology type and/or rock properties through the acoustic system/apparatus would not be necessary. In contrast, the upper bearing cup 204 is stationary all the time.

The drive shaft 103 is rotated by a motor (not shown) through a gear transmission system, in which a large gear 210 is connected to a medial portion of the drive shaft 103. At the bottom of the drive shaft 103, the upmost piece of pipe of the drill string 102 threads therein. The motor thus rotates the drill string 102 and the drill bit 101 (FIG. 1) through rotation of the drive shaft 103. At the top, the drive shaft 103 is connected to a washpipe 215 by a rotatable packing box 214 which seals the connection between the drive shaft 103 and the washpipe 215. The packing box 214 is screwed on the top of the drive shaft 103 and rotates together with the drive shaft 103. A stationary seal 213 is located below the packing box 214. A holding nut 216 connects the washpipe 215 to the goose neck 108. A manual valve 211 and a remotely controlled valve 212 (also known as Lower Well Control Valve, LWCV) are provided to control blow out.

FIGS. 3-5 illustrate the major components of an acoustic signal recording and transmitting system 300 interfaced with components of a top drive drill rig 31 (FIG. 1) according to an embodiment of the present invention. According to an exemplary configuration, one or more acoustic sensors 301 are attached to the packing box 214, which is screwed on top of the drive shaft 103 and rotates with the drive shaft 103. Although a plurality of acoustic sensors 301 are typically employed, for illustrative purposes only a single acoustic sensor 301 is shown in the figure. Acoustic sensor 301 rotates together with the drive shaft 103. An amplifier is either built-in or is connected to the acoustic sensor 301. The received acoustic signals are amplified first before transmission.

According to the exemplary configuration, the acoustic signal recording and transmitting system 300 comprises an inductive telemetry system, which includes, for example, an induction loop 302, a pickup 303 used to transmit the acoustic sensor signal from the acoustic sensor 301 to a receiver, a receiver 305 that transmits acoustic sensor data to a data acquisition unit 353, and the data acquisition unit 353, which samples the acoustic signal and digitizes the sampled signal and then sends the digitized signal (data) to a computer 306. The induction loop 302, in conjunction with pickup 303, can also serve to supply electric power to the acoustic sensor 301. Electric power is supplied by electromagnetic coupling between the induction loop 302 and the pickup 303 as will be understood by one of ordinary skill in the art. Note, in the exemplary configuration, the length of cable/wire between the pickup 303 and receiver 305 is generally limited to keep the maintain of the acoustic signals at a perceptible level. At receiver 305, the signals can be amplified and then transmitted over a long distance to the data acquisition unit 353.

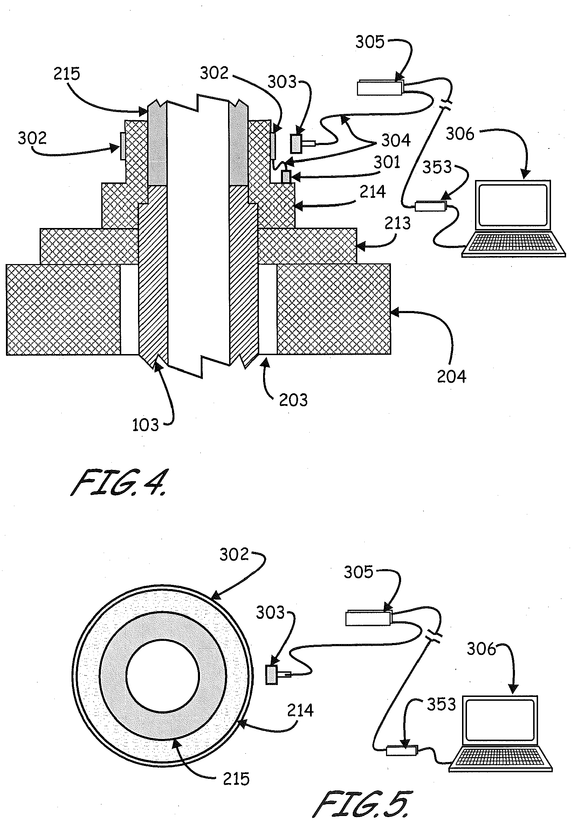

According to the configuration shown in FIGS. 3 and 4, the induction loop 302 is wrapped around the packing box 214 and rotates together with the packing box 214. The acoustic sensor 301 is connected the induction loop 302 by electronic wire 304. The pickup 303, which provides a stationary interface between the stationary receiver 305 and the rotating induction loop 302, is correspondingly not attached to the packing box 204 and it does not rotate. The connection (e.g., electronic wire) between the receiver 305 and the data acquisition unit 353 is protected inside the service loop 105 (FIG. 1).

Note, although attachment of the acoustic sensor 301 to the packing box 214 can enhance ease of installation and can provide a location to maximally pick up the drill sounds of the drill bit 101 engaging rock during drilling operations, the acoustic sensor 301 and the corresponding components of the inductive telemetry system may be installed at other locations that provide at least a near maximal pick up of the drill sounds of the drill bit 101 engaging rock during drilling operations. This can generally be accomplished as long as the acoustic sensor or sensors 301 are attached directly to the drive shaft 103 or to a direct extension of the drive shaft 103 at a location where the induction loop 302 can be wrapped around the drive shaft 103 or drive shaft extension and be connected to the sensors 301 at a position adjacent thereto. Note also, although different types of acoustic sensors 301 may be used, such as, for example, accelerometers, measurement microphones, contact microphones, etc., when microphones are used to receive/record the acoustic signals from the drill bit 101 transmitting through the drilling string 102 and the drive shaft 103, they should be acoustically insulated with good insulating material to block the ambient noise emanating from nearby components of the drilling rig 31. As such, accelerometers have been found to provide the best ease of installation. Additionally, microphones tend to have a higher high-frequency attenuation than that of accelerometers.

In operation, when the drilling acoustic signals are generated at the drill bit 101, they transmit upward through the drill string 102, drive shaft 103 and then the packing box 214. They are picked up by the acoustic sensors 301 attached directly to the packing box 214. The drilling acoustic signals picked up by the acoustic sensor 301 are amplified. The amplified acoustic signals are transmitted to the induction loop 302. From there, they are transmitted to the pickup 303 by induction. The acoustic signals are then transmitted from the pickup 303 to the receiver 305 through an electronic wire 304. The received signals are transmitted to a data acquisition unit 353, via an electronic wire, which samples the acoustic signal and digitizes the sampled signal and then transmits the digitized signal (data) to a computer 306. As will be described in more detail later, the digitized acoustic signals received by the computer 306 are first transformed into frequency domain by using Fourier transformation. The frequency distribution data are further evaluated for acoustic characteristics. The frequency distribution, and/or characteristics of the acoustic signals may then be used to identify lithology and to evaluate petrophysical properties of the rock under drilling in real time, as described later.

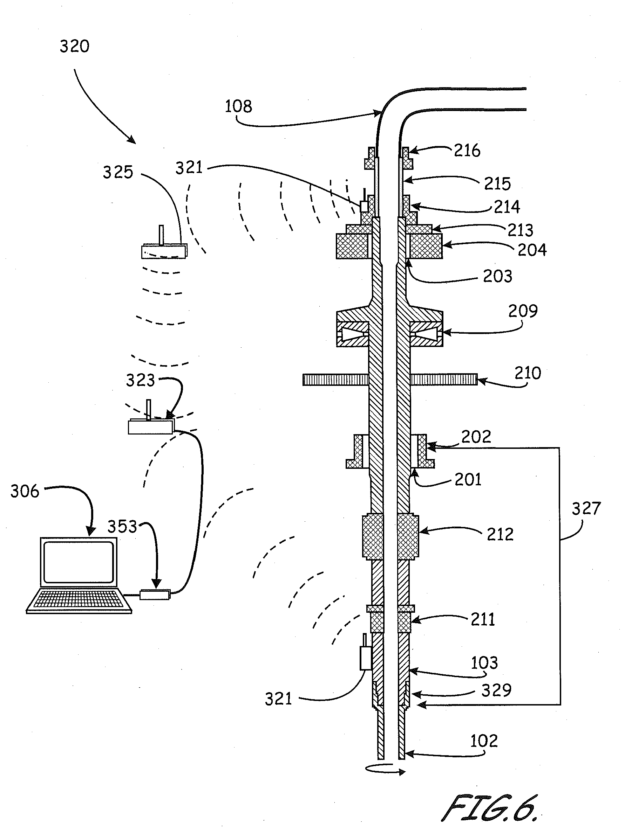

FIG. 6 illustrates the major components of an acoustic signal recording and transmitting system 320 interfaced with components of a top drive drill rig 31 (FIG. 1) according to another embodiment of the present invention. According to an exemplary configuration, a wireless acoustic sensor 321 is attached to the drive shaft 103 and to the packing box 214, respectively, and rotates together with the drive shaft 103. Although multiple acoustic sensors are typically employed, for illustrative purposes, only two separately positioned acoustic sensors 321 are shown in the figure. Note, different types of acoustic sensors 321 may be used such as, for example, accelerometers, measurement microphones, contact microphones, etc.. Accelerometers, however, have been found to function the best as they have less high-frequency attenuation and are less affected by ambient noise then other types of acoustic sensors, thus reducing installation requirements. When microphones are used to pick up the acoustic signals, for example, they generally need to, or at least should, be acoustically insulated with good insulating material to block the noise from drilling rig 31.

According to an exemplary configuration, each acoustic sensor 321 includes or is connected to a wireless transmitter. Between the sensor and the wireless transmitter, there is a signal amplifier, which could be either a built-in type or a separate unit. The acoustic sensor, amplifier, and wireless transmitter are collectively termed as "wireless acoustic sensor" arranged as one unit, separate units, or a combination thereof.

According to the exemplary configuration, the acoustic signal recording and transmitting system comprises a wireless telemetry system 320, which includes, for example, the wireless acoustic sensors 321, a gateway or other appropriate type of receiver 323, and optionally a data acquisition unit 353. The wireless telemetry system can also include one or more repeaters 325, if needed, positioned between the wireless acoustic sensors 321 and the receiver unit 323 to relay the data from the acoustic sensors 321 if the distance between the wireless acoustic sensors 321 and the receiver unit 323 exceeds the maximum specified distance and/or to improve signal strength.

According to the configuration shown in FIG. 6, one or more wireless acoustic sensors 321 are attached to the packing box 214 to maximally pick up the drill sounds of the drill bit 101 engaging rock during drilling operations. Also or alternatively, one or more wireless sensors are attached to the drive shaft 103. When wireless acoustic sensors 321 are attached to the drive shaft 103 in the drill rig 31 having the exemplary configuration, the only available location found to provide at least substantially maximum pick up of the drill sounds of the drill bit 101 engaging rock during drilling operations with an acceptable level of ambient noise, is the location 327 between the rotary manifold 202 and the joint 329 between the drive shaft 103 and the drill string 102. FIG. 6 shows a convenient location just below the remotely controlled valve 212 for the wireless acoustic sensors 321.

In operation, when the drilling acoustic signals are generated at the drill bit 101, they transmit upward through the drill string 102 and then drive shaft 103, and are picked up by the wireless acoustic sensors 321 attached directly to the drive shaft 103 and/or the packing box 214. The drilling acoustic signals picked by the wireless acoustic sensors 321 are digitized by the wireless acoustic sensors 321 before they are transmitted to the receiving unit 323 if there is a built-in or external data acquisition unit in or coupled to the wireless acoustic sensor 321, or the drilling acoustic signals are digitized by a built-in or external data acquisition unit in the receiving unit 323 before they are transmitted to the computer 306 through an electrical or optical cable. The digitized acoustic signals (data) transmitted to the computer 306 are first transformed into the frequency domain by using Fourier transformation. The frequency distribution data are further evaluated for acoustic characteristics. The frequency distribution, and/or characteristics of the acoustic signals may then be used to identify lithology and to evaluate petrophysical properties of the rock under drilling in real time, as described later.

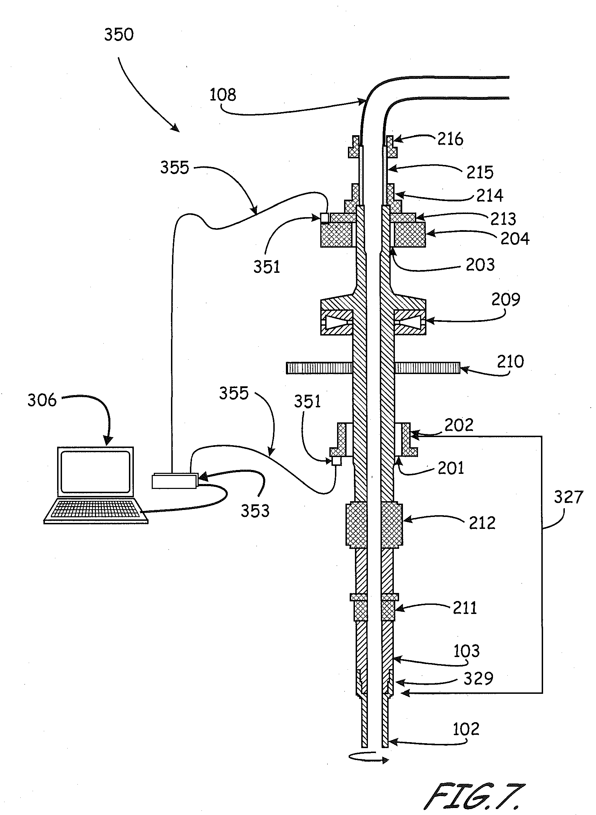

FIG. 7 illustrates the major components of an acoustic signal recording and transmitting system 350 interfaced with components of a top drive drill rig 31 (FIG. 1) according to another embodiment of the present invention. According to an exemplary configuration, one or more acoustic sensors 351 are attached to metal parts which are in close, good contact with drive shaft 103, for example, through bearings for maximally picking up the drill sound

According to an exemplary configuration, the acoustic signal recording and transmitting system 350 comprises wired transmitting system, which includes, for example, a data acquisition unit 353 and an electrical wire or other conductor 355 connected to each acoustic sensor 351 and to the data acquisition unit 353. The electronic wires 355 extending between the acoustic sensors 351 and the data acquisition unit 353 may be arranged and secured inside the service loop 105. Further, an amplifier is either built-in or is connected to each acoustic sensor 351. The received acoustic signals are amplified first before transmission.

As the rotary manifold 202 and the upper bearing cup 204 are in close, good contact with drive shaft 103 through bearings, according to an exemplary configuration, one or more sets of acoustic sensors 351 are attached on either of them to at least substantially maximally pick the drilling acoustic signals. As the upper bearing cup 204 stays stationary all the time, however, it is more management-wise and installation-wise convenient to connect the one or more sets of the acoustic sensors 321 to the upper bearing cup 204.

Note, although a plurality of acoustic sensors 351 are typically employed in each location, for illustrative purposes, only a single acoustic sensor 351 at each location is shown in the figure. Note also, although different types of acoustic sensors 351 may be used such as, for example, accelerometers, measurement microphones, contact microphones, etc., accelerometers have been found to function the best as they have less high-frequency attenuation and are less affected by ambient noise then other types of acoustic sensors, thus reducing installation requirements. When microphones are used to pick up the acoustic signals, for example, they generally need to or at least should be acoustically insulated with good insulating material to block the noise from drilling rig 31.

In operation, when the drilling acoustic signals are generated at the drill bit 101, they transmit upward through the drill string 102 and then drive shaft 103. Since the rotary manifold 202 and the upper bearing cup 204 are in close, good contact with the drive shaft 103 through bearings, the drilling acoustic signals can be picked up at least near maximally at these two locations by the acoustic sensors 351. The drilling acoustic signals picked up by the acoustic sensors 351, after being amplified, are sent through electronic wires 355 to the data acquisition unit 353. The acoustic signals are digitized by the data acquisition unit 353 and then sent to the computer 306 for analysis. The digitized acoustic signals are first transformed into frequency domain by using Fourier transformation. The frequency distribution data are further evaluated for acoustic characteristics. The frequency distribution, and/or characteristics of the acoustic signals may then be used to identify lithology and to evaluate petrophysical properties of the rock under drilling in real time, as described below.

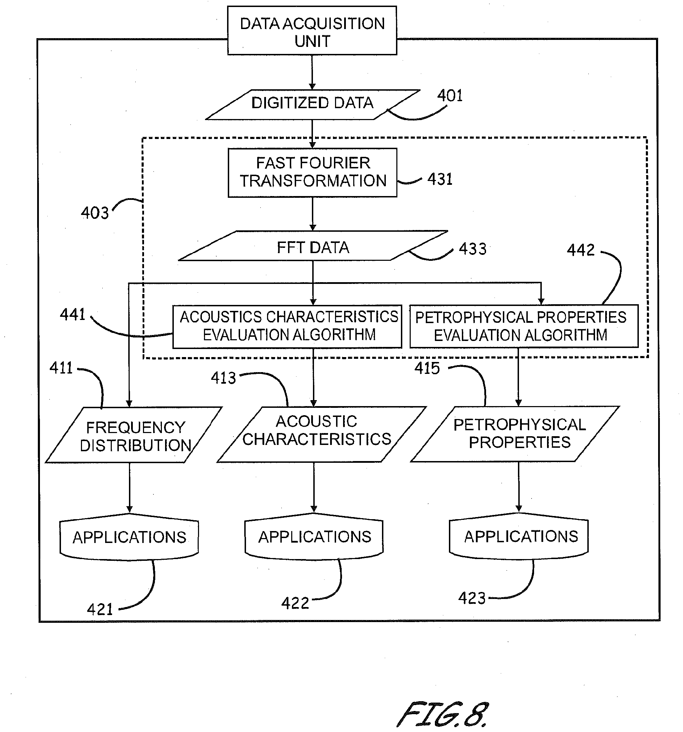

Referring to FIG. 8, digitized data 401, digitized by a data acquisition unit associated with receiver 305, wireless acoustic sensor 321, receiver 323, or convertor 353, depending upon the transmitting system implementation, is read by a computer program 403 (e.g., a petrophysical properties analyzing program), stored in memory 405 (see FIG. 1) accessible to processor 407 of computer 306. The computer program 403 analyzes the digitized data 401 to derive a frequency distribution 411, acoustic characteristics 413, and petrophysical properties 415 of the rock undergoing drilling. The respective results, e.g., frequency distribution 411, acoustic characteristics 413, and petrophysical properties 415, can be used in various applications 421, 422, 423, to include lithology identification, drill bit steering, formation boundary identification, among others. Such data along with rock sample data, rock modeling data, etc. can be stored in database 425 stored in either internal memory 405 or an external memory accessible to processor 407.

Note, the computer 306 can be in the form of a personal computer or in the form of a server or server farm serving multiple user interfaces or other configurations known to those skilled in the art. Note, the computer program 403 can be in the form of microcode, programs, routines, and symbolic languages that provide a specific set or sets of ordered operations that control the functioning of the hardware and direct its operation, as known and understood by those skilled in the art. Note also, the computer program 403, according to an embodiment of the present invention, need not reside in its entirety in volatile memory, but can be selectively loaded, as necessary, according to various methodologies as known and understood by those skilled in the art. Still further, at least portions of the computer program 403 can be stored in memory of the sensor subassembly 33 (Fig. 1) when so configured.

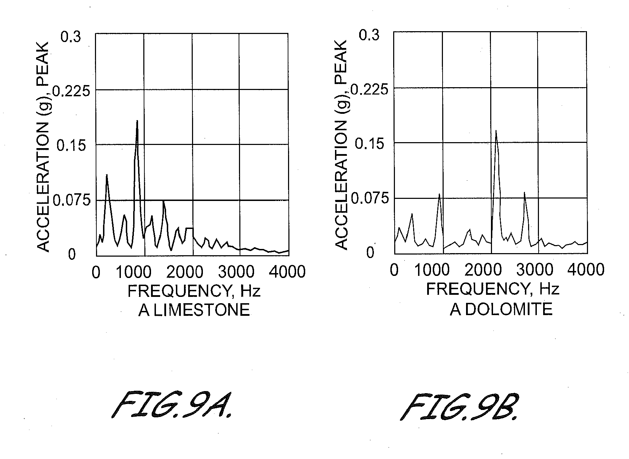

As illustrated in the figure, the digitized data 401 is transformed into Fast Fourier Transform (FFT) data 433 by a Fast Fourier Transformation 431. The FFT data 433, typically filtered by a filter (not shown) to remove some low/high frequency and/or low amplitude data points, generated from other sources, i.e. not from the bit cutting into the rocks. The main part of the filtered FFT data 431 is a frequency distribution 411, which is the frequency and amplitude information of a sampled acoustic signal. Two examples of such signal are shown in FIGS. 9A and 9B. FIG. 9A illustrates the frequency distribution for a limestone and FIG. 9B illustrates the frequency distribution for a dolomite. A review of the frequency distribution of the two different types of carbonate illustrates how the frequency distribution can be used directly to distinguish lithologies.

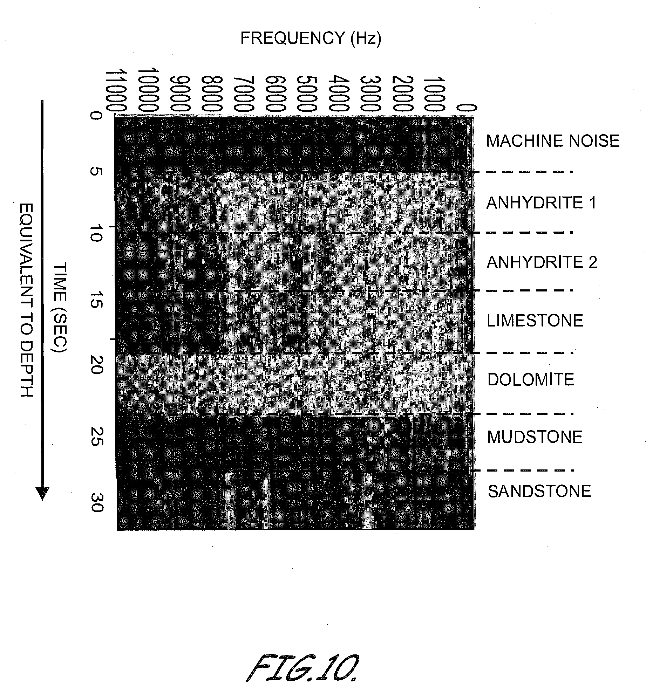

The filtered FFT data 433 is used either directly in some applications 421, such as lithology type identification, formation boundaries determination, etc., represented by example at 421. An example of such signal displaying diagram is shown in FIG. 10, which illustrates results of a laboratory experiment showing different lithologies have different time-frequency spectrums and lithology boundaries can be determined using the diagram. In FIG. 10, the color represents amplitude, with color normally displayed as red being highest (the intermixed color mostly concentrated just below the 4000 Hz range in this example) and the color normally displayed as blue being the lowest (the more washed out color in this example).

Also or alternatively, the filtered FFT data 431 is further processed by an acoustic characteristics evaluation algorithm 441 and/or petrophysical properties evaluation algorithm 442. According to the exemplary configuration, an acoustic characteristics evaluation algorithm 441 is employed to evaluate the filtered FFT data 433 for select acoustic characteristics 413, such as, for example, mean frequency, normalized deviation of frequency, mean amplitude, normalized deviation of amplitude, apparent power. These acoustic characteristics for an acoustic signal sample are defined as follows:

$$\mu_f = \frac{\sum_{i=a}^{n} A_i f_i}{\sum_{i=a}^{n} A_i} \tag{1}$$

$$\sigma_{f\_N} = \frac{1}{\mu_f} \sqrt{\sum_{i=1}^{n} \frac{A_i}{\sum_{k=1}^{n} A_i} \left(f_i - \mu_f\right)^2} \tag{2}$$

$$\mu_A = \frac{1}{n} \sum_{i=1}^{n} A_i \tag{3}$$

$$\sigma_{A\_N} = \frac{1}{\mu_A} \sqrt{\frac{1}{n} \sum_{i=1}^{n} (A_i - \mu_A)^2} \tag{4}$$

$$P_a = \sum_{i=1}^{n} A_i^2 f_i^2 \tag{5}$$

wherein:

$\mu_f$-mean frequency, Hz,

$\sigma_{f\_N}$ --normalized deviation of frequency, Hz,

$\mu_A$--mean amplitude, the unit depending on the type of acoustic sensor used in the measurement,

$\sigma_{A\_N}$--normalized deviation of amplitude, the unit depending on the type of acoustic sensor used in the measurement,

$P_a$ -- apparent power, the unit depending on the type of acoustic sensor used in the measurement,

$f_i$-- frequency of the $i^{th}$ point of the acoustic signal sample, Hz,

$A_i$--amplitude of the $i^{th}$ point of the acoustic signal sample, the unit depending on the type of acoustic sensor used in the measurement, and

n--number of data points of the acoustic signal sample.

The mean frequency and the normalized deviation of frequency characterize the frequency distribution, while the mean amplitude and the normalized deviation of amplitude characterize the loudness level of the drilling sound. Apparent power represents the power of the acoustic signals. In the evaluation, these characteristics can be calculated within the whole range or a partial range of the frequency of the acoustic samples. The range is selected to achieve the maximum difference of these characteristics among different lithologies.

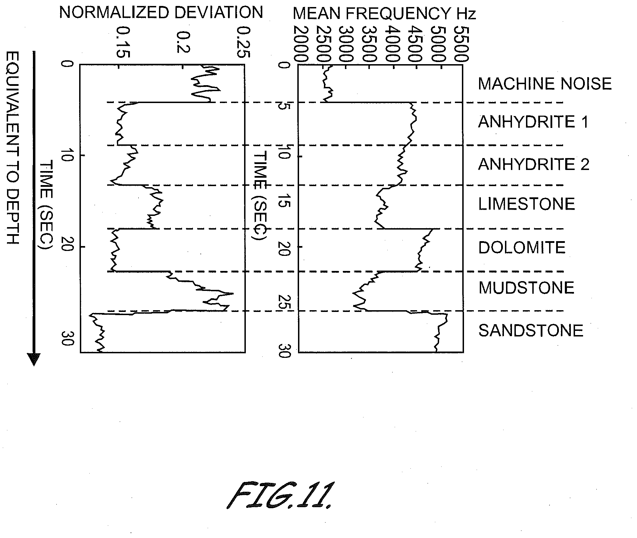

The derived acoustic characteristics 413 can be used directly for certain applications, such as lithology type identification, formation boundary determination represented by example at 422. FIG. 11 illustrates results of a laboratory experiment showing that the mean frequency and normalized deviation of frequency correlated well with different lithology types. Accordingly, a comparison of the acoustic characteristics 413 to those of a sample having known acoustic characteristics can yield a lithology identification of the rock presently encountered by the drill bit 101, real-time, during drilling operations.

According to the exemplary configuration, an either bit-specific or bit-independent petrophysical properties evaluation algorithm 442 can be employed to evaluate the filtered FFT data 433 to determine petrophysical properties 415 of the rock undergoing drilling. U.S. Patent Application No. US2013/075160, filed on July 20, 2012, titled *"Apparatus, Computer Readable Medium, and Program Code for Evaluating Rock Properties While Drilling Using Downhole Acoustic Sensors and a Downhole Broadband Transmitting System,"* and U.S. Patent Application No. US2013/075161, filed on July 20, 2012, titled *"Methods of Evaluating Rock Properties While Drilling Using Downhole Acoustic Sensors and a Downhole Broadband Transmitting System,"* collectively describe apparatus for and methods of building the petrophysical properties evaluation algorithm 442 for both a specific drill bit 101 and a drill bit independent scenario.

Application of the results from the processed acoustic signal.

One direct result is the frequency distribution 411 (FIG. 8), which may be used directly in lithology type identification, formation boundary determination, etc. FIGS. 9A and 9B, for example, show the unique frequency distribution of two different types of carbonates. Further, FIG. 10 illustrates a three dimensional depiction of the frequency distribution in correlation with various lithology types. The figures illustrate that the frequency distribution can be used in the lithology type identification from matching a detected/determined frequency distribution with a frequency distribution provided by a core sample or other rock sample of known lithology type.

FIG. 11 demonstrates the feasibility of using acoustic characteristics 413 (FIG. 8) to derive lithology information/identification. For example, as described above, mean frequency and normalized deviation of frequency can be calculated from FFT data of the drilling sounds of rock encountered during drilling operations. The figure demonstrates how the lithology types can be distinguished by the combination of the two characteristics: mean frequency and the normalized deviation of frequency. If mean amplitude, normalized deviation of the amplitude, and apparent power are also used, an even better result may be achieved. The figure also inherently demonstrates that formation boundaries can be determined from acoustic characteristics.

Further, the above identified U.S. Patent Application No. US2013/075160 titled "*Apparatus, Computer Readable Medium, and Program Code for Evaluating Rock Properties While Drilling Using Downhole Acoustic Sensors and a Downhole Broadband Transmitting System,*" demonstrates the feasibility of building a petrophysical properties evaluation algorithm 442, which can be used to evaluate processed forms of the sound generated by operationally engaging the drilling bit 101 with the rock being drilled.

Various aspects provide several advantages. For example, various aspects beneficially provide a means to identify lithology type and physical properties, truly in real-time, using the drive shaft/drive shaft extension-mounted acoustic sensors. This advantage makes various aspects ideal in the applications of (1) horizontal and lateral well drill steering and (2) locating the relative position for setting the casing shoe at a much higher precision. Various aspects can also be used to (3) detect fractured zones; and (4) interpret rock lithologies and petrophysical properties. Various aspects beneficially supply additional information for evaluating petrophysical properties of the rocks, such as porosity, strength, and presence of hydrocarbons, besides conventional logs, through the utilization of data obtained through the analysis of acoustic signals to evaluate these petrophysical properties. Such data can beneficially be beyond that which can be conventionally supplied real-time, particularly without the use of a LWD tool.

In the drawings and specification, there have been disclosed a typical preferred embodiment of the invention, and although specific terms are employed, the terms are used in a descriptive sense only and not for purposes of limitation. The invention has been described in considerable detail with specific reference to these illustrated embodiments. It will be apparent, however, that various modifications and changes can be made within the scope of the invention as defined by the appended claims.

**Claims**

1.   A method of determining rock properties engaged by a drill bit during drilling operations, the method comprising the steps of:

deriving a plurality of acoustic characteristics (413) from an acoustic sensor data signal, the plurality of acoustic characteristics (413) including mean frequency, mean amplitude, normalized deviation of frequency, normalized deviation of amplitude, and apparent power, wherein the acoustic sensor data signal is derived from an acoustic signal recording and transmitting system (300, 320, 350) including an acoustic sensor (33, 301, 321, 351), the acoustic sensor (33, 301, 321, 351) positioned on one of the following: a drive shaft (103) of a top drive (104) of a top drive drill rig (31), and an extension of the drive shaft (103) of the top drive drill rig (31), the drive shaft (103) including a plurality of extensions, wherein the extension of the drive shaft (103) on which the acoustic sensor (33, 301, 321, 351) is positioned (103) is a packing box (214) which rotates with the drive shaft (103), an upper bearing cup (204) positioned adjacent the packing box (214) and stationary with respect to the drive shaft (103), or a rotary manifold (202) operably coupled to and encircling a portion of the drive shaft (103), and wherein the drive shaft (103) is connected to a drill string (102) with a drill bit (101) connected to the downhole end of the drill string (102); and
correlating the mean frequency, the mean amplitude, the normalized deviation of frequency, the normalized deviation of amplitude, and the apparent power with the same types of acoustic characteristics (413) of a rock sample of known lithology type to identify, in real time, one or more of (i) lithology type, and (ii) one or more petrophysical properties (415) of rock engaged by a drill bit (101) during drilling operations, wherein correlating comprises:

digitizing acoustic data contained within the acoustic sensor data signal, thereby to generate digitized acoustic data (401);
transmitting the digitized acoustic data (401) to a computer (306);
transforming the digitized acoustic data (401) into Fast Fourier Transform, FFT, data (433) by a Fast Fourier Transformation (431);
filtering the FFT data (433); and
processing the filtered FFT data by an acoustic characteristics evaluation algorithm (441) and/or petrophysical properties evaluation algorithm (442).

2. A method as defined in Claim 1, wherein the acoustic signal recording and transmitting system (300) comprises an inductive telemetry system, the inductive telemetry system including:

a stationary pickup (303) configured to receive the acoustic sensor data signal from the acoustic sensor (301) through an electromagnetic coupling and to supply electric power to the acoustic sensor (301) via the electromagnetic coupling; and
a receiver (305) positioned to receive the acoustic sensor data signal from the pickup (303) and to transmit the acoustic sensor data signal to a data acquisition unit (353).

3. A method as defined in Claim 2, wherein the data acquisition unit (353) is configured to:

receive the acoustic sensor data signal from the receiver (305);
sample the received acoustic sensor data signal;
digitize the sampled acoustic sensor data signal; and
transmit the digitized acoustic sensor data signal to a computer (306).

4. A method as defined in Claim 1, wherein the acoustic signal recording and transmitting system (320) comprises a wireless telemetry system, the wireless telemetry system comprising:

a wireless transmitter operably connected to or integral with the acoustic sensor (321) thereby to define a wireless acoustic sensor, and
a wireless gateway (323) configured to receive the acoustic sensor data signal from the wireless acoustic sensor and to transmit the acoustic sensor data signal or a digitized form of the acoustic sensor signal to a computer (306).

5. A method as defined in Claim 4, wherein the wireless telemetry system further comprises a data acquisition unit (353) configured to:

sample the received acoustic sensor data signal;
digitize the sampled acoustic sensor data signal; and
transmit the digitized acoustic sensor data signal to a computer (306).

6. A method as defined in Claim 1, wherein the acoustic signal recording and transmitting system (350) comprises a wired transmitting system, the wired transmitting system including:

a data acquisition unit (353) configured to digitize acoustic sensor signals received from the acoustic sensor (351) and to send the digitized acoustic sensor signals to a computer (306), and
a wire (355) extending between the acoustic sensor (351) and the data acquisition unit (353), the wire (355) being secured inside a service loop (105) of the top drive drill rig (31).

7. A method as defined in preceding Claim, the method further comprising the steps of:

deriving a frequency distribution (411) from acoustic data contained within the acoustic sensor data signal; and
correlating the frequency distribution (411) of the acoustic sensor data signal with a frequency distribution of a rock sample of known lithology type to identify, real-time, the lithology type of rock engaged by the drill bit (101) during drilling operations.

8. A method as defined in any preceding Claim, the method further comprising the steps of:

deriving a petrophysical properties evaluation algorithm (442) to predict one or more petrophysical properties (415) of rock engaged by the drill bit (101) during drilling operations;

encoding the derived petrophysical properties evaluation algorithm (442) in a computer program; and

employing the computer program to predict the one or more petrophysical properties (415) of rock engaged by the drill bit (101) during drilling operations from acoustic data contained within the acoustic sensor data signal.

9. A method as defined in Claim 8, wherein filtering the FFT data (433) comprises filtering the FFT data (433) to remove unwanted data points, thereby to generate filtered FFT data, the unwanted data points including one or more of (a) high frequency data, (b) low frequency data, and (c) low amplitude data; and wherein the method further comprises the step of:

utilizing a frequency distribution defined by the filtered FFT data to identify, in real time, one or more of (i) the lithology type, and (ii) one or more petrophysical properties (415) of the rock engaged by the drill bit (101) during drilling operations.

10. A method as defined in any preceding Claim, the method comprising the steps of:

receiving the acoustic sensor data signal from an acoustic signal recording and transmitting system (300, 320, 350) by a computer (306), the acoustic sensor data signal representing an acoustic signal generated real-time by an acoustic sensor (33, 301, 321, 351) as a result of rotational contact of a drill bit (101) with rock during drilling;

deriving a petrophysical properties evaluation algorithm (442) to predict one or more petrophysical properties (415) of rock engaged by the drill bit (101) during drilling operations and encoding the derived petrophysical properties evaluation algorithm (442) into a subroutine for a petrophysical properties analyzing program, the petrophysical properties evaluation algorithm (442) including the steps of:

transforming acoustic signal data using a Fast Fourier Transformation (431) thereby to convert the acoustic signal data to frequency domain data, and

filtering the frequency domain data to remove frequency domain data produced from sources other than rock engaged by the drill bit (101) during drilling operations thereby to create filtered data; and

employing the encoded petrophysical properties evaluation algorithm to predict the one or more petrophysical properties (415) of rock engaged by the drill bit (101) during drilling operations from the acoustic data contained within the acoustic sensor data signal.

## Patentansprüche

1. Verfahren zum Bestimmen von Eigenschaften von Gestein, in das ein Bohrer während Bohrvorgängen eingreift, wobei das Verfahren die folgenden Schritte umfasst:

Ableiten einer Vielzahl von akustischen Merkmalen (413) von einem akustischen Sensordatensignal, wobei die Vielzahl von akustischen Merkmalen (413) eine mittlere Frequenz, eine mittlere Amplitude, eine normierte Abweichung der Frequenz, eine normierte Abweichung der Amplitude und eine Scheinleistung einschließt, wobei das akustische Sensordatensignal von einem Akustiksignal-Aufzeichnungs- und -Übertragungssystem (300, 320, 350) einschließlich eines akustischen Sensors (33, 301, 321, 351) abgeleitet ist, wobei der akustische Sensor (33, 301, 321, 351) auf einem der Folgenden positioniert ist: einer Antriebswelle (103) eines Top-Drive-Antriebs (104) einer Bohranlage mit Top-Drive-Antrieb (31), und einer Verlängerung der Antriebswelle (103) der Bohranlage mit Top-Drive-Antrieb (31), wobei die Antriebswelle (103) eine Vielzahl von Verlängerungen einschließt, wobei die Verlängerung der Antriebswelle (103), auf welcher der akustische Sensor (33, 301, 321, 351) positioniert ist (103), eine Stopfbuchse (214) ist, die sich mit der Antriebswelle (103) dreht, einer oberen Lagerschale (204), die angrenzend an die Stopfbuchse (214) positioniert und in Bezug auf die Antriebswelle (103) feststehend ist, oder einen drehenden Verteiler (202), der funktionell mit einem Abschnitt der Antriebswelle (103) gekoppelt ist und diesen umgibt, und wobei die Antriebswelle (103) mit einem Bohrstrang (102) mit einem mit dem unteren Ende des Bohrstrangs (102) verbundenen Bohrer (101) verbunden ist; und

Korrelieren der mittleren Frequenz, der mittleren Amplitude, der normierten Abweichung der Frequenz, der normierten Abweichung der Amplitude und der Scheinleistung mit den gleichen Arten von akustischen Merkmalen (413) einer Gesteinsprobe eines bekannten Lithologietyps, um, in Echtzeit, ein oder mehrere von (i) dem Lithologietyp, und (ii) eine oder mehrere petrophysikalische Eigenschaften (415) von Gestein, in das ein Bohrer (101) während Bohrvorgängen eingreift, zu identifizieren,

wobei das Korrelieren Folgendes umfasst:

Digitalisieren von akustischen Daten, die innerhalb des akustischen Sensordatensignals enthalten sind, um dadurch digitalisierte akustische Daten (401) zu erzeugen;
Übertragen der digitalisierten akustischen Daten (401) an einen Computer (306);
Umwandeln der digitalisierten akustischen Daten (401) durch eine schnelle Fourier-Transformation (431) in schnelle Fourier-Transformations-Daten, FFT, (433);
Filtern der FFT-Daten (433); und
Verarbeiten der gefilterten FFT-Daten durch einen Bewertungsalgorithmus akustischer Merkmale (441) und/oder einen Bewertungsalgorithmus petrophysikalischer Eigenschaften (442).

2. Verfahren wie in Anspruch 1 definiert, wobei das Akustiksignal-Aufzeichnungs- und -Übertragungssystem (300) ein induktives Telemetriesystem umfasst, wobei das induktive Telemetriesystem Folgendes einschließt:

   einen feststehenden Aufnehmer (303), der zum Empfangen des akustischen Sensordatensignals von dem akustischen Sensor (301) durch eine elektromagnetische Kopplung und zum Bereitstellen von Strom an den akustischen Sensor (301) über die elektromagnetische Kopplung konfiguriert ist; und
   einen Empfänger (305), der zum Empfangen des akustischen Sensordatensignals von dem Aufnehmer (303) und zum Übertragen des akustischen Sensordatensignals an eine Datenerfassungseinheit (353) positioniert ist.

3. Verfahren wie in Anspruch 2 definiert, wobei die Datenerfassungseinheit (353) zu Folgendem konfiguriert ist:

   Empfangen des akustischen Sensordatensignals von dem Empfänger (305);
   Abtasten des empfangenen akustischen Sensordatensignals;
   Digitalisieren des abgetasteten akustischen Sensordatensignals; und
   Übertragen des digitalisierten akustischen Sensordatensignals an einen Computer (306).

4. Verfahren wie in Anspruch 1 definiert, wobei das Akustiksignal-Aufzeichnungs- und -Übertragungssystem (320) ein drahtloses Telemetriesystem umfasst, wobei das drahtlose Telemetriesystem Folgendes umfasst:

   einen drahtlosen Sender, der funktionell verbunden oder einstückig mit dem akustischen Sensor (321) ist, um dadurch einen drahtlosen akustischen Sensor zu definieren, und
   ein drahtloses Gateway (323), das zum Empfangen des akustischen Sensordatensignals von dem drahtlosen akustischen Sensor und zum Übertragen des akustischen Sensordatensignals oder einer digitalisierten Form des akustischen Sensorsignals an einen Computer (306) konfiguriert ist.

5. Verfahren wie in Anspruch 4 definiert, wobei das drahtlose Telemetriesystem ferner eine Datenerfassungseinheit (353) umfasst, die zu Folgendem konfiguriert ist:

   Abtasten des empfangenen akustischen Sensordatensignals;
   Digitalisieren des abgetasteten akustischen Sensordatensignals; und
   Übertragen des digitalisierten akustischen Sensordatensignals an einen Computer (306).

6. Verfahren wie in Anspruch 1 definiert, wobei das Akustiksignal-Aufzeichnungs- und -Übertragungssystem (350) ein drahtgebundenes Übertragungssystem umfasst, wobei das drahtgebundene Übertragungssystem Folgendes einschließt:

   eine Datenerfassungseinheit (353), die zum Digitalisieren von akustischen Sensorsignalen, die vom akustischen Sensor (351) empfangen wurden, und zum Senden der digitalisierten akustischen Sensorsignale an einen Computer (306) konfiguriert ist, und
   einen Draht (355), der sich zwischen dem akustischen Sensor (351) und der Datenerfassungseinheit (353) erstreckt, wobei der Draht (355) in einer Serviceschleife (105) der Bohranlage mit Top-Drive-Antrieb (31) gesichert ist.

7. Verfahren wie in einem vorhergehenden Anspruch definiert, wobei das Verfahren ferner die folgenden Schritte umfasst:

   Ableiten einer Frequenzverteilung (411) von akustischen Daten, die innerhalb des akustischen Sensordatensignals enthalten sind; und
   Korrelieren der Frequenzverteilung (411) des akustischen Sensordatensignals mit einer Frequenzverteilung einer Gesteinsprobe eines bekannten Lithologietyps, um, in Echtzeit, den Lithologietyp von Gestein, in das der Bohrer (101) während Bohrvorgängen eingreift, zu identifizieren.

8. Verfahren wie in einem vorhergehenden Anspruch definiert, wobei das Verfahren ferner die folgenden Schritte umfasst:

Ableiten eines Bewertungsalgorithmus petrophysikalischer Eigenschaften (442), um eine oder mehrere petrophysikalische Eigenschaften (415) von Gestein vorherzusagen, in das der Bohrer (101) während Bohrvorgängen eingreift;

Codieren des abgeleiteten Bewertungsalgorithmus petrophysikalischer Eigenschaften (442) in einem Computerprogramm; und

Einsetzen des Computerprogramms zum Vorhersagen der einen oder mehreren petrophysikalischen Eigenschaften (415) von Gestein, in das der Bohrer (101) während Bohrvorgängen eingreift, von akustischen Daten, die innerhalb des akustischen Sensordatensignals enthalten sind.

9. Verfahren wie in Anspruch 8 definiert, wobei das Filtern der FFT-Daten (433) das Filtern der FFT-Daten (433) umfasst, um unerwünschte Datenpunkte zu entfernen, um dadurch gefilterte FFT-Daten zu erzeugen, wobei die unerwünschten Datenpunkte eins oder mehrere von (a) Hochfrequenzdaten, (b) Niedrigfrequenzdaten, und (c) Niedrigamplitudendaten einschließen; und wobei das Verfahren ferner den folgenden Schritt umfasst:

Verwenden einer Frequenzverteilung, die durch die gefilterten FFT-Daten definiert ist, um, in Echtzeit, ein oder mehrere von (i) dem Lithologietyp, und (ii) eine oder mehrere petrophysikalische Eigenschaften (415) von dem Gestein, in das der Bohrer (101) während Bohrvorgängen eingreift, zu identifizieren,

10. Verfahren wie in einem vorhergehenden Anspruch definiert, wobei das Verfahren die folgenden Schritte umfasst:

Empfangen des akustischen Sensordatensignals von einem Akustiksignal-Aufzeichnungs- und -Übertragungssystems (300, 320, 350) durch einen Computer (306), wobei das akustische Sensordatensignal ein akustisches Signal darstellt, das in Echtzeit durch einen akustischen Sensor (33, 301, 321, 351) als ein Ergebnis eines Drehkontakts eines Bohrers (101) mit Gestein beim Bohren erzeugt wird.

Ableiten eines Bewertungsalgorithmus petrophysikalischer Eigenschaften (442), um eine oder mehrere petrophysikalische Eigenschaften (415) von Gestein vorherzusagen, in das der Bohrer (101) während Bohrvorgängen eingreift, und Codieren des abgeleiteten Bewertungsalgorithmus petrophysikalischer Eigenschaften (442) in eine Subroutine für ein Programm zum Analysieren petrophysikalischer Eigenschaften, wobei der Bewertungsalgorithmus petrophysikalischer Eigenschaften (442) die folgenden Schritte einschließt:

Umwandeln von akustischen Signaldaten unter Verwendung einer schnellen Fourier-Transformation (431), um dadurch die akustischen Signaldaten in Frequenzbereichsdaten zu konvertieren, und

Filtern der Frequenzbereichsdaten, um Frequenzbereichsdaten zu entfernen, die von anderen Quellen erzeugt wurden, als Gestein, in das der Bohrer (101) während Bohrvorgängen eingreift, um dadurch gefilterte Daten zu erstellen; und

Einsetzen des codierten Bewertungsalgorithmus petrophysikalischer Eigenschaften, um die eine oder mehreren petrophysikalische Eigenschaften (415) von Gestein, in das der Bohrer (101) während Bohrvorgängen eingreift, vorherzusagen aus den akustischen Daten, die innerhalb des akustischen Sensordatensignals enthalten sind.

**Revendications**

1. Procédé de détermination des propriétés d'une roche mise en prise par un trépan au cours d'opérations de forage, le procédé comprenant les étapes consistant à :

dériver une pluralité de caractéristiques acoustiques (413) à partir d'un signal de données de capteur acoustique, la pluralité de caractéristiques acoustiques (413) incluant une fréquence moyenne, une amplitude moyenne, un écart normalisé de fréquence, un écart normalisé d'amplitude, et une puissance apparente, dans lequel le signal de données de capteur acoustique est dérivé d'un système d'enregistrement et de transmission de signaux acoustiques (300, 320, 350) incluant un capteur acoustique (33, 301, 321, 351), le capteur acoustique (33, 301, 321, 351) étant positionné sur l'un parmi : un arbre d'entraînement (103) d'un entraînement par le haut (104) d'un appareil de forage à entraînement par le haut (31), et une extension de l'arbre d'entraînement (103) de l'appareil de forage à entraînement par le haut (31), l'arbre d'entraînement (103) incluant une pluralité d'extensions, dans lequel l'extension de l'arbre d'entraînement (103) sur laquelle le capteur acoustique (33, 301, 321, 351) est positionné (103) est une boîte de garniture (214) qui tourne avec l'arbre d'entraînement (103), une cuvette de roulement supérieure (204) positionnée de manière adjacente à la boîte de garniture (214) et fixe par rapport à l'arbre d'entraînement (103), ou un collecteur rotatif (202) fonctionnellement couplé à une partie de l'arbre d'entraînement (103) et encerclant celle-ci, et dans lequel l'arbre d'entraînement (103) est connecté à un train de tiges de forage (102) avec un trépan (101) connecté à l'extrémité de fond de trou du train de tiges de forage (102) ; et

corréler la fréquence moyenne, l'amplitude moyenne, l'écart normalisé de fréquence, l'écart normalisé d'amplitude, et la puissance apparente avec les mêmes types des caractéristiques acoustiques (413) d'un échantillon de roche de type lithologique connu pour identifier, en temps réel, un ou plusieurs parmi (i) le type lithologique, et (ii) une ou plusieurs propriétés pétrophysiques (415) de la roche avec laquelle un trépan (101) entre en prise au cours d'opérations de forage,

dans lequel l'étape de corrélation comprend les étapes consistant à :

numériser des données acoustiques contenues dans le signal de données de capteur acoustique, pour générer ainsi des données acoustiques numérisées (401) ;

transmettre les données acoustiques numérisées (401) à un ordinateur (306) ;

transformer les données acoustiques numérisées (401) en données de transformée de Fourier rapide, FFT, (433) par une transformée de Fourier rapide (431) ;

filtrer les données FFT (433) ; et

traiter les données FFT filtrées par un algorithme d'évaluation des caractéristiques acoustiques (441) et/ou un algorithme d'évaluation des propriétés pétrophysiques (442).

2. Procédé selon la revendication 1, dans lequel le système d'enregistrement et de transmission de signaux acoustiques (300) comprend un système de télémétrie inductive, le système de télémétrie inductive incluant :

un détecteur stationnaire (303) configuré pour recevoir le signal de données de capteur acoustique (301) par l'intermédiaire d'un couplage électromagnétique et pour fournir de l'énergie électrique au capteur acoustique (301) par l'intermédiaire du couplage électromagnétique ; et

un récepteur (305) positionné pour recevoir le signal de données de capteur acoustique du détecteur (303) et pour transmettre le signal de données de capteur acoustique à une unité d'acquisition de données (353).

3. Procédé selon la revendication 2, dans lequel l'unité d'acquisition de données (353) est configurée pour :

recevoir le signal de données de capteur acoustique du récepteur (305) ;

échantillonner le signal de données de capteur acoustique reçu ;

numériser le signal de données du capteur acoustique échantillonné ; et

transmettre le signal de données numérisé du capteur acoustique à un ordinateur (306).

4. Procédé selon la revendication 1, dans lequel le système d'enregistrement et de transmission de signaux acoustiques (320) comprend un système de télémétrie sans fil, le système de télémétrie sans fil comprenant :

un émetteur sans fil fonctionnellement connecté ou intégré au capteur acoustique (321), pour définir ainsi un capteur acoustique sans fil, et

une passerelle sans fil (323) configurée pour recevoir le signal de données du capteur acoustique à partir du capteur acoustique sans fil et pour transmettre le signal de données du capteur acoustique ou une forme numérisée du signal du capteur acoustique à un ordinateur (306).

5. Procédé selon la revendication 4, dans laquelle le système de télémétrie sans fil comprend en outre une unité d'acquisition de données (353) configurée pour :

échantillonner le signal de données de capteur acoustique reçu ;

numériser le signal de données de capteur acoustique échantillonné ; et

transmettre le signal de données numérisé de capteur acoustique à un ordinateur (306).

6. Procédé selon la revendication 1, dans laquelle le système d'enregistrement et de transmission de signaux acoustiques (350) comprend un système de transmission câblé, le système de transmission câblé incluant :

une unité d'acquisition de données (353) configurée pour numériser des signaux de capteur acoustique reçus du capteur acoustique (351) et pour envoyer les signaux numérisés du capteur acoustique à un ordinateur (306), et

un câble (355) s'étendant entre le capteur acoustique (351) et l'unité d'acquisition de données (353), le câble (355) étant fermement fixé dans une boucle de service (105) de l'appareil de forage à entraînement par le haut (31).

**7.** Procédé selon la revendication précédente, le procédé comprenant en outre les étapes consistant à :

dériver une distribution de fréquence (411) à partir de données acoustiques contenues dans le signal de données de capteur acoustique ; et

corréler la distribution de fréquence (411) du signal de données de capteur acoustique avec une distribution de fréquence d'un échantillon de roche de type lithologique connu pour identifier, en temps réel, le type lithologique de la roche mise en prise par le trépan (101) au cours d'opérations de forage.

**8.** Procédé selon l'une quelconque des revendications précédentes, le procédé comprenant en outre les étapes consistant à :

dériver un algorithme d'évaluation des propriétés pétrophysiques (442) pour prédire une ou plusieurs propriétés pétrophysiques (415) de la roche mise en prise par le trépan (101) au cours d'opérations de forage ;

coder l'algorithme d'évaluation des propriétés pétrophysiques dérivé (442) dans un programme informatique ; et utiliser le programme d'ordinateur pour prédire les une ou plusieurs propriétés pétrophysiques (415) de la roche mise en prise par le trépan (101) au cours d'opérations de forage à partir de données acoustiques contenues dans le signal de données de capteur acoustique.

**9.** Procédé selon la revendication 8, dans lequel le filtrage des données FFT (433) comprend le filtrage des données FFT (433) pour supprimer des points de données indésirables, pour générer ainsi des données FFT filtrées, les points de données indésirables incluant une ou plusieurs parmi (a) des données à haute fréquence, (b) des données à basse fréquence, et (c) des données à faible amplitude ; et dans lequel le procédé comprend en outre l'étape consistant à :

utiliser une distribution de fréquences définie par les données FFT filtrées pour identifier, en temps réel, un ou plusieurs parmi (i) le type lithologique, et (ii) une ou plusieurs propriétés pétrophysiques (415) de la roche mise en prise par le trépan (101) au cours d'opérations de forage.

**10.** Procédé selon l'une quelconque des revendications précédentes, le procédé comprenant les étapes suivantes :

la réception du signal de données de capteur acoustique d'un système d'enregistrement et de transmission de signaux acoustiques (300, 320, 350) par un ordinateur (306), le signal de données de capteur acoustique représentant un signal acoustique généré en temps réel par un capteur acoustique (33, 301, 321, 351) en conséquence du contact rotatif d'un trépan (101) avec une roche au cours du forage ;

le fait de dériver un algorithme d'évaluation des propriétés pétrophysiques (442) pour prédire une ou plusieurs propriétés pétrophysiques (415) de la roche mise en prise par le trépan (101) au cours d'opérations de forage et le codage de l'algorithme d'évaluation des propriétés pétrophysiques dérivé (442) dans un sous-programme pour un programme d'analyse des propriétés pétrophysiques, l'algorithme d'évaluation des propriétés pétrophysiques (442) comprenant les étapes consistant à :

transformer des données du signal acoustique à l'aide d'une transformation de Fourier rapide (431), pour ainsi convertir les données de signal acoustique en données du domaine des fréquences, et

filtrer les données de domaine des fréquences pour éliminer des données de domaine des fréquences produites par des sources autres que la roche mise en prise par le trépan (101) au cours d'opérations de forage, pour créer ainsi des données filtrées ; et

utiliser l'algorithme codé d'évaluation des propriétés pétrophysiques pour prédire les une ou plusieurs propriétés pétrophysiques (415) de la roche mise en prise par le trépan (101) au cours d'opérations de forage à partir des données acoustiques contenues dans le signal de données de capteur acoustique.

FIG.1.

108
216
215
214
213
204
203
209
210
202
201
212
211
103
102

FIG.2.

FIG.3.

FIG.4.

FIG.5.

FIG.6.

350

108

216
215
214
213
204
203

355
351

306

355

351

209

210

202
201

355

353

327

212

211

103
329

102

*FIG.7.*

FIG.8.

FIG.9A.

FIG.9B.

FIG.10.

FIG.11.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060076161 A
- US 2013075160 A

- US 2013075161 A